Europäisches Patentamt

(19) European Patent Office

Office européen des brevets

(11) Publication number: **0 264 368 B1**

(12) **EUROPEAN PATENT SPECIFICATION**

(45) Date of publication of patent specification :
15.05.91 Bulletin 91/20

(51) Int. Cl.⁵ : **C08F 8/12, B01J 39/08**

(21) Application number: 86902630.2

(22) Date of filing : 02.04.86

(86) International application number:
**PCT/US86/00654**

(87) International publication number:
**WO 87/05913 08.10.87 Gazette 87/22**

(54) **PROCESS FOR PREPARING IMPROVED WEAK ACID RESINS AND POROUS WEAK ACID RESINS.**

(43) Date of publication of application :
27.04.88 Bulletin 88/17

(45) Publication of the grant of the patent :
15.05.91 Bulletin 91/20

(84) Designated Contracting States :
**DE FR GB IT NL**

(56) References cited :
**US-A- 3 926 891**
**US-A- 4 062 817**
**US-A- 4 524 186**
**No relevant documents have been disclosed.**

(73) Proprietor : **THE DOW CHEMICAL COMPANY**
**2030 Dow Center Abbott Road P.O. Box 1967**
**Midland Michigan 48640-1967 (US)**

(72) Inventor : **CHONDE, Yohannes**
**2706 Highbrook Street**
**Midland, MI 48640 (US)**

(74) Representative : **Burford, Anthony Frederick et al**
**W.H. Beck, Greener & Co. 7 Stone Buildings Lincoln's Inn**
**London WC2A 3SZ (GB)**

## Description

The present invention relates to ion exchange resins, and in particular, to ion exchange resins which are acidic in character.

Weak acid resins have been prepared by suspension polymerizing and crosslinking unsaturated carboxylic acids such as acrylic acid. Unfortunately, the polymerization of unsaturated carboxylic acids is highly exothermic making reaction control very difficult. Thus, the physical properties of the final resin product are typically very poor in quality.

Weak acid resins have been prepared by the post-hydrolysis of suspension polymerized, crosslinked acrylic acid esters. Unfortunately, such a process provides resin products which have undergone incomplete hydrolysis and exhibit poor physical strengths. Thus, such resins can have low exchange capacities and low resistance to osmotic shock.

In view of the deficiencies of the prior art, it would be highly desirable to provide a weak acid ion exchange resin with a high operating capacity which can be prepared in a controlled manner and exhibits high resistance to osmotic shock during regeneration.

The present invention is a process for preparing weak acid type cation exchange resins by subjecting to caustic hydrolysis a copolymer comprising in polymerized form (1) 70-90 weight percent of an alkylacrylate monomer which is hydrolyzed under the caustic reaction conditions ; (2) 1-20 weight percent of (2a) an alkylacrylate which is not substantially hydrolyzed under said caustic reaction conditions ; and (2b) optionally a non-hydrolysable monomer ; (3) 4-12 weight percent of a crosslinking monomer.

As used herein the term "hydrolysis" refers to caustic hydrolysis. The term "caustic" is to be broadly construed to mean a strongly basic species. In another aspect, the present invention is the weak acid type cation exchange resin which is prepared using the process as described hereinbefore.

The process of this invention provides the skilled artisan with a method for preparing weak acid type cation exchange resins exhibiting a high operating ion exchange capacity and improved osmotic shock properties. Resin beads of this invention can have a porous character, and in particular, a macroporous character. Such resin beads can be subjected to an increased number of regeneration cycles without a substantial amount of cracking of said resin beads. Such beads are useful in a wide variety of applications which can include the demineralization of water for enhanced oil recover, the removal of heavy metal ions from various aqueous streams, and the like.

Polymers useful in the practice of this invention are crosslinked polymers formed by the addition polymerization of at least one hydrolyzable alkylacrylate, at least one alkylacrylate which is less hydrolyzable under caustic conditions than said hydrolyzable alkylacrylate, and at least one polymerizable unsaturated monomer capable of providing crosslinking to the polymer.

Hydrolyzable monomers useful herein are alkyl acrylates. The choice of alkyl acrylate will depend upon the degree or ease of hydrolysis which is desired. In general, any alkyl ester of acrylic acid, itaconic acid, etc. which is readily hydrolyzable under caustic conditions can be employed. Preferred alkyl acrylates include ethylacrylate, butylacrylate, and hexylacrylate. More preferred alkyl acrylates are those wherein the alkyl moiety has from 1 to 3 carbon atoms, which methylacrylate being especially preferred.

Non-hydrolyzable monomers which are optionally useful herein include, for example, acrylonitrile, styrene, ethylbenzene, vinyl toluene, methylstryrene, vinylbenzyl chloride, and halogenated styrene, heterocyclic aromatics such as vinylpyridine and substituted vinylpyridines, vinyl acetate, vinyl chloride, vinylidene chloride, N-vinylpyrrolidone, and methacrylates which are not highly hydrolyzable under conditions under which the hydrolyzable monomers are converted to carboxylic acid moieties.

Monomers which are less hydrolyzable than the aforementioned hydrolyzable monomers are those alkylacrylates which contain an alkyl functionality which provides a less hydrolyzable character to the monomer than said hydrolyzable monomer. In particular, the less hydrolyzable monomer does not undergo hydrolysis to any sunstantial degree under conditions which the hydrolyzable monomer undergoes hydrolysis. Preferred less hydrolyzable monomers typically have alkyl functionalities which have higher amounts of carbon atoms than those hydrolyzable monomers. For example, if methylacrylate is the hydrolyzable monomer, then ethylacrylate or butylacrylate can be employed as the monomer which is less hydrolyzable in character.

Similarly, if ethylacrylate is employed as the hydrolyzable monomer, then butylacrylate or hexylacrylate can be employed as the monomer which is less hydrolyzable in character.

Crosslinking monomers are those monomers which can introduce crosslinking to the resulting polymer. Examples of such monomers are those useful in preparing ion exchange resins and are those polyvinyl crosslinking monomers such as divinylbenzene, divinyltoluene, divinylxylene, and divinylnapthalene ; ethylene glycol dimethacrylate ; trimethylol propane triacrylate ; divinylsuccinate. See, also, those disclosed in US-A-4,419,245 and US-A-4,444,961.

2

The monomer composition which is employed can vary depending upon factors such as the density of the bead desired, the amount of physical stability which is desired, the ion exchange capacity which is desired, and the like. Typically, the amount of hydrolysable monomer can range from 70 to 90 weight percent ; the amount of less hydrolyzable and optional non-hydrolyzable monomer can range from 1 to 20 weight percent ; the amount of less hydrolyzable and optional non-hydrolyzable monomer can range from 1 to 20 weight percent; and the amount of crosslinking monomer can range from 4 to 12 weight percent based an all monomers. If desired, the hydrolyzable monomer portion can be polymerized in conjunction with a monomer such as acrylic acid.

The process of this invention is preferably performed by suspension polymerizing the aforementioned monomers under conditions such that polymerization occurs. Suitable solvents, surfactants, diluents, activators and catalysts are known in the art. See, for example, US-A-4,224,415. The resulting polymer product is isolated and subjected to hydrolysis conditions. For example, the polymer can be contacted with a hydroxide solution. The resin can be washed with an acid solution to yield the H-form resin. Beads can be obtained in a gel from or in a porous from.

While beads having a wide range of pore sizes can be employed, beads having pore sizes greater than 100 Å (0.01 micrometres) in diameter are preferred. That is, porous beads of this invention include the macroporous beads. Macroporous beads are those macroreticular types of beads as are defined in U.S. Patent N°. 4,224,415. For example, macroporous beads are prepared by those techniques described in U.S. Patent N°. 4,382,124.

The resin beads of this invention are preferably spherical beads having particle sizes ranging from 180 to 2,000 micrometres, preferably from 200 to 1,000 microns. The distribution of the particle size can be narrowed by employing the appropriate stabilizer. Narrow distributions of particle sizes can be obtained by using the method taught in US-A-4,444,961.

The resins of this invention exhibit good osmotic shock resistance as well as high ion exchange capacity. It is believed that the copolymerization of the hydrolyzable monomer with the non-hydrolyzable monomer or less hydrolyzable monomer causes the crosslinking in the beads to be less centralized. The more even spread of crosslinking in the bead is believed to provide a stronger product which exhibits less potential to crack or break during repeated shrinking and swelling.

The following Examples are presented to further illustrate but not limit the scope of this invention. All parts and percentages are by weight, unless otherwise noted.

## Example 1

Into a jacketed stainless steel reactor was charged an aqueous solution comprising 1,500 grams (g) distilled water, 2.4 g carboxymethyl methylcellulose and 2.7 g sodium dichromate. To this solution was charged an organic mixture containing 763 g methylacrylate, 105 g n-butylacrylate, 200 g divinylbenzene, 100 g isooctane diluent, 0.5 g tertiary butylperoctoate and 0.9 g tertiary butyl perbenzoate. The reactor was purged with nitrogen for 15 minutes. The mixture was then agitated and the polymerization was conducted at 75°C for 5 hours, followed by 110°C for 3 hours. The reaction mixture was cooled. The spherical polymer product was filtered and washed with distilled water. The diluent was removed by steam distillation.

The polymer product was mixed with a 20 percent active aqueous sodium hydroxide solution at 100°C for 5-6 hours. The polymer product was filtered and whashed with 1 normal hydrochloric acid. The final resin exhibits a bulk density in the acid from of 0.83 g/ml. The wet volume of the resin is 51.6 percent. The osmotic shock resistance of the sample is high.

After 500 cycles of treatment of the resin beads with alternating 5 percent hydrochloric acid and 5 percent sodium hydroxide solutions, 100 percent of the beads are left whole. The operating capacity of the resin is 47 kg/ft 3 (1660 kg/m³) of resin. Other properties of resin which werre similary prepared (designated as Sample No. 1) are presented in Table I.

## Table I

| Sample | Wet Volume Capacity (meq/ml) | Water Retention Capacity (%) | Expansion[1] | Osmotic Shock (% whole bead) |
|---|---|---|---|---|
| 1 | 4.2 | 48.7 | 64 | 100 |
| C-1* | 3.32 | 51.2 | 90 | 70 |
| C-2* | 4.1 | 44 | 71 | 80 |

Table I (cont.)

* Not an example of the invention.
C-1 and C-2 are commercially available macroporous resins. C-1 is a carboxylated macroporous resin comprising substantial amounts of polymerized methacrylate and is sold commercially as Amberlite DP-1 by Rohm and Eaas Company. C-2 is a carboxylated macroporous resin comprising substantial amounts of polymerized methyl acrylate and is sold commercially as Dowex CCR-2E by The Dow Chemical Company. "Amberlite" and "Dowex" are Registered Trade marks in some countries.
Expansion is percent expansion based on volume from sodium form of resin to acid form.

The data in Table I indicate that the sample of this invention (Sample N°. 1) exhibits increased osmotic shock resistance as compared to commercially available macroporous resins. In addition, it is noted that Sample N°. 1 has undergone 500 cycles of the treatment as described hereinbefore, while the comparative samples (i.e. Sample Nos. C-1 and C-2) have undergone only 100 cycles of treatment.

## Example 2

Into a reactor was charged an aqueous solution comprising 1496 g deionized water, 2.4 g carboxymethyl methylcellulose and 1.5 g sodium dichromate. To this solution was charged an organic mixture containing 150 g ethyl acrylate, 750 g methacrylate, 150 g of a 55 percent active divinylbenzene formulation, 340 g isooctane, 2.5 g tertiary butylperoctoate and 2.5 g tertiary butyl perbenzoate. The mixture was treated and reacted as in Example 1, hydolyzed with a 20 percent active aqueous sodium hydroxide solution as described in Example 1, and filtered and washed with 1 normal hydrochloric acid. The sample was designated as Sample No. 2.

Into a reactor was charged an aqueous solution comprising 1496 g deionized water, 2.4 g carboxymethyl methylcellulose and 1.5 g sodium dichromate. To this solution was charged an organic mixture containing 105 g butyl acrylate, 663 g ethyl acrylate, 200 g of a 55 percent active divinylbenzene formulation, 100 g isooctane, 0.5 g tertiary butylperoctoate and 0.9 g tertiary butyl perbenzoate. The mixture was treated and reacted, hydrolyzed and washed as described hereinbefore. The sample was designated as Sample No. 3.

For comparison purposes was prepared a crosslinked ethyl acrylate copolymer which was hydrolyzed and which was designated as Sample No. C-3. Into a reactor was charged 1500 g of an aqueous solution as was described in Example 1. To this solution was charged an organic mixture containing 763 g ethyl acrylate, 200 g of a 55 percent active divinylbenzene formulation, 160 g isooctane, 0.5 tertiary butyl perbenzoate and 0.9 g tertiary butyl peroctoate. The mixture was treated and reacted, hydrolyzed and washed as described in Example 1.

For comparison purposes was prepared a crosslinked butylacrylate copolymer which was hydrolyzed and which was designated as Sample No. C-4. Into a reactor was charged 1500 g of an aqueous solution as was described in Example 1. To this solution was charged an organic mixture containing 763 g butyl acrylate, 200 g of a 55 percent active divinylbenzene formulation, 100 g isooctane, 0.5 g tertiary butyl peroctoate and 0.9 g tertiary butyl perbenzoate. The mixture was treated and reacted, hydrolyzed and washed as described in Example 1.

For comparison purposes was prepared a crosslinked methyl acrylate copolymer which was hydrolyzed and which was designated as Sample No. C-5. Into a reactor was charged 1,500 g of an aqueous solution as described in Example 1. To this was charged an organic mixture containing 763 g methyl acrylate, 126 g of a 55 percent active divinylbenzene formulation, 100 g isooctane and catalyst. The mixture was treated and reacted hydorlyzed and washed as described in Example 1.

Data for the Samples of this Example are presented in Table II.

## TABLE II

| Sample | Wet Volume Capacity (meq/ml) | Water Retention Capacity (Percent) | Osmotic Shock Percent Whole Bead |
|---|---|---|---|
| 2 | 3.0 | 42 | 97 |
| 3 * | 3.2 | 44 | 98 |
| C-3 * | 3.5 | 42 | 69 |
| C-4 * | 2.0 | 26 | 0 |
| C-5 * | 4.0 | 50 | <20 |

* Not an example of the invention.

The data in Table II indicate that the samples of this invention (i.e., Sample Nos. 2 and 3) exhibit increased osmotic shock resistance as compared to the comparative samples.

## Claims

1. A process for preparing weak acid type cation exchange resins by subjecting to caustic hydrolysis a copolymer comprising in polymerized form (1) 70-90 weight percent of an alkylacrylate which is hydrolyzed under the caustic reaction conditions, (2) 1-20 weight percent of (2a) an alkylacrylate which is not substantially hydrolyzed under said caustic reaction conditions and (2b) optionally, a non-hydrolyzable monomer, and (3) 4-12 weight percent of a crosslinking monomer.

2. A process as claimed in Claim 1, wherein said hydrolyzable alkylacrylate is an alkyl ester of acrylic acid.

3. A process as claimed in Claim 1 or Claim 2, wherein said hydrolyzable alkylacrylate is an alkylacrylate, wherein the alkyl moiety has 1 to 3 carbon atoms.

4. A process as claimed in any one of the preceding claims, wherein said less hydrolyzable alkylacrylate is an alkyl ester of acrylic acid.

5. A process as claimed in any one of the preceding claims, wherein said hydrolyzable alkylacrylate contains an alkyl functionality which contains less carbon atoms than said less hydrolyzable acrylate monomer.

6. A process as claimed in Claim 5, wherein said hydrolyzable alkylacrylate is methyl acrylate, ethyl acrylate or butyl acrylate and said less hydrolyzable alkylacrylate is ethyl acrylate or butyl acrylate.

7. A process as claimed in any one of the preceding claims, wherein said crosslinking monomer is a polyvinyl crosslinking mononer.

8. A process as claimed in any one of the preceding claims, wherein said copolymer is hydrolyzed in the presence of sodium hydroxide solution.

9. The use in an ion-exchange process of a weak acid type cation exchange resin prepared by a process as claimed in any one of the preceding claims.

## Ansprüche

1. Verfahren zur Herstellung von Kationenaustauscherharzen vom schwach sauren Typ, dadurch gekennzeichnet, daß man ein Copolymeres einer kaustischen Hydrolyse unterwirft, wobei das Copolymere in der polymerisierten Form umfaßt (1) 70-90 Gew.% eines Alkylacrylats, das unter den kaustischen Reaktionsbedingungen hydrolysiert wird, (2) 1-20 Gew.% von (2a) einem Alkylacrylat, das unter den kaustischen Reaktionsbedingungen nicht wesentlich hydrolysiert wird, und (2b) gegebenenfalls ein nicht-hydrolsierbares Monomer, und (3) 4-12 Gew.% eines vernetzenden Monomers.

2. Verfahren nach Anspruch 1, dadurch gekennzeichnet, daß das hydrolysierbare Alkylacrylat ein Alkylester von Acrylsäure ist.

3. Verfahren nach Anspruch 1 oder 2, dadurch gekennzeichnet, daß das hydrolysierbare Alkylacrylat ein Alkylacrylat ist, in dem der Alkylteil 1-3 Kohlenstoffatomen besitzt.

4. Verfahren nach einem der vorhergehenden Ansprüche, dadurch gekennzeichnet, daß das weniger hydrolysierbare Alkylacrylat ein Alkylester von Acrylsäure ist.

5. Verfahren nach einem der vorhergehenden Ansprüche, dadurch gekennzeichnet, daß das hydrolysierbare Alkylacrylat eine Alkylfunktionalität enthält, die weniger Kohlenstoffatome enthält als das weniger hydrolysierbare Acrylatmonomer.

6. Verfahren nach Anspruch 5, dadurch gekennzeichnet, daß das hydrolysierbare Alkylacrylat Methylacrylat, Ethylacrylat oder Butylacrylat ist, und das weniger hydrolysierbare Alkylacrylat, Ethylacrylat und Butylacrylat ist.

7. Verfahren nach einem der vorhergehenden Ansprüche, dadurch gekennzeichnet, daß das vernetzende Monomere ein Polyvinyl-vernetzendes Monomeres ist.

8. Verfahren nach einem der vorhergehenden Ansprüche, dadurch gekennzeichnet, daß das Copolymere in Gegenwart einer Natriumhydroxidlösung hydrolysiert wird.

9. Verwendung eines nach einem Verfahren nach einen der vorhergehenden Ansprüche hergestellten Kationenaustauscherharzes vom schwach sauren Typ in einem Ionenaustauschverfahren.


## Revendications

1. Procédé de préparation de résines échangeuses de cations de type faiblement acide, consistant à soumettre à une hydrolyse caustique un copolymère comprenant, sous forme polymérisée, (1) 70 à 90 pour-cent en poids d'un acrylate d'alcoyle monomère qui est hydrolysé dans les conditions de réaction caustique, (2) 1 à 20 pour-cent en poids de (2a) un acrylate d'alcoyle qui n'est pas hydrolysé de manière notable dans ces conditions de réaction caustique et (2b), d'une manière facultative, un nonomère non-hydrolysable et (3) 4 à 12 pour-cent en poids d'un monomère de réticulation.

2. Procédé suivant la revendication 1, selon lequel l'acrylate d'alcoyle hydrolysable est un ester d'alcoyle de l'acide acrylique.

3. Procédé suivant la revendication 1 ou la revendication 2, selon lequel l'acrylate d'alcoyle hydrolysable est un acrylate d'alcoyle dans lequel le radical alcoyle contient de 1 à 3 atomes de carbone.

4. Procédé suivant l'une quelconque des revendications précédentes, selon lequel l'acrylate d'alcoyle moins hydrolysable est un ester d'alcoyle de l'acide acrylique.

5. Procédé suivant l'une quelconque des revendications précédentes, selon lequel l'acrylate d'alcoyle hydrolysable contient une fonction alcoyle qui contient un nombre d'atomes de carbone plus faible que le monomère d'acrylate moins hydrolysable.

6. Procédé suivant la revendication 5, selon lequel l'acrylate d'alcoyle hydrolysable est l'acrylate de méthyle, l'acrylate d'éthyle ou l'acrylate de butyle et l'acrylate d'alcoyle moins hydrolysable est l'acrylate d'éthyle ou l'acrylate de butyle.

7. Procédé suivant l'une quelconque des revendications précédentes, selon lequel le monomère de réticulation est un monomère de réticulation de type polyvinylique.

8. Procédé suivant l'une quelconque des revendications précédentes, selon lequel le copolymère est hydrolysé en présence d'une solution d'hydroxyde de sodium.

9. Utilisation, dans un procédé d'échange d'ions, d'une résine échangeuse de cations de type faiblement acide préparée par un procédé suivant l'une quelconque des revendications précédentes.